Europäisches Patentamt

(19) European Patent Office  (11) Numéro de publication: **0 113 279**

Office européen des brevets  **B1**

(12) **FASCICULE DE BREVET EUROPÉEN**

(45) Date de publication du fascicule du brevet:
**05.11.86**

(21) Numéro de dépôt: **83402480.4**

(22) Date de dépôt: **20.12.83**

(51) Int. Cl.⁴: **C 08 J 7/04,** B 29 C 41/02,
B 32 B 27/42

(54) Matériaux stratifiés présentant une couche de finition améliorée.

(30) Priorité: **30.12.82 FR 8222060**

(43) Date de publication de la demande:
**11.07.84 Bulletin 84/28**

(45) Mention de la délivrance du brevet:
**05.11.86 Bulletin 86/45**

(84) États contractants désignés:
**AT BE CH DE GB IT LI LU NL SE**

(56) Documents cité:
**EP-A-0 015 785
DE-A-2 263 236
GB-A-2 025 998**

**CHEMICAL ABSTRACTS, vol. 85, 1976, page 39, no.
22350w, Columbus, Ohio, US**

(73) Titulaire: **Société Chimique des Charbonnages,
Tour Aurore Place des Reflets Cédex no 5,
F-92080 Paris la Défense 2 (FR)**

(72) Inventeur: **Cousin, Michel, 81, Rue Wattiez, F-62218
Loison- sous- Lens (FR)**
Inventeur: **Meyer, Nicolas, 12, Rue des Déportés,
F-62300 Lens (FR)**

(74) Mandataire: **Rieux, Michel, C d F Chimie S.A.
Service Propriété Industrielle Tour Aurore Place
des Reflets Cédex no. 5, F-92080 Paris la
Défense 2 (FR)**

LIBER, STOCKHOLM 1986

## Description

La présente invention concerne des matériaux stratifiés présentant une couche de finition améliorée. Elle a plus particuliérement pour objet des matériaux stratifiés à base de résine phénolique recouverts d'une couche de finition ne présentant aucun défaut d'aspect de surface.

Les matériaux stratifiés à base de résine phénolique sont des matériaux connus qui résultent de l'empilage d'armatures de verre imprégnées de résine synthétique. Ils sont par exemple décrits dans "Encyclopedia of Polymer Science and Technology", Interscience Publishers, 1970, V. 12, page 1 "Reinforced Plastics" et V. 8, page 121 "Laminates". Un matériau complexe de ce type, laisse apparaître en surface dans la plupart des cas des fibres de verre insuffisamment imprégnées qui marquent la surface en laissant apparaître leur empreinte en saillie. Si on essaie de masquer ces défauts de surface en appliquant directement sur le matériau stratifié un revêtement, par exemple une peinture à base de liant polyuréthane, l'aspect de surface du matériau obtenu reste mauvais, et on ne parvient pas à obtenir une surface lisse.

Afin de pallier ces inconvénients, on a également proposé de démarrer l'élaboration du stratifié, par la mise en place, directement sur le moule pourvu d'un agent de démoulage, d'une couche de résine non armée appelée communément "gel coat". Cette couche adhère au stratifié et peut éventuellement constituer une couche de support pour une peinture par exemple. Cependant, suivant les résines mises en oeuvre pour fabriquer le "gel coat" les résultats obtenus ne sont pas satisfaisants. C'est ainsi par exemple que l'on a proposé des "gel coat" en résine phénolique pour revêtir des stratifiés phénoliques renforcés en fibres de verre: dans ce cas la surface obtenue présente des micropiqûres et l'empreinte des fibres. On peut faire disparaître les micropiqûres et l'empreinte des fibres en déposant une couche de résine phénolique plus épaisse mais on observe alors l'apparition de microcraquelures ou faïençage. On a aussi proposé d'utiliser un "gel coat" en résine de polyester insaturé: dans ce cas la dureté superficielle obtenue est insuffisante.

Afin de résoudre tous ces problèmes et obtenir en particulier des matériaux stratifiés ne présentant ni faïençage, ni microcraquelures et une bonne dureté, on a proposé de revêtir les matériaux stratifiés à base de résine phénolique à l'aide de "gel coat" furannique. Malheureusement les matériaux ainsi revêtus présentent l'inconvénient d'etre teintés de la couleur des résines furanniques, c'est-à-dire en noir. Il est alors nécessaire de les revêtir d'une autre résine thermodurcissable convenablement pigmentée si l'on désire un matériau qui présente une teinte différente.

De tels matériaux sont décrits dans le brevet européen EP-A-0015785.

La présente invention concerne des matériaux stratifiés à base de résine phénolique armée d'un renfort, revêtus d'une couche de finition dont la surface ne présente ni marquage par les fibres de renfort, ni faïençage même après un long stockage et qui ont une dureté superficielle accrue.

La présente invention a pour objet des matériaux stratifiés à base de résine phénolique armée d'un renfort revêtus d'une couche de finition ayant au moins deux faces, caractérisés en ce qu'ils comportent sur au moins une de leurs faces, une couche d'une composition à base de résines phénoliques butylées directement en contact avec la résine phénolique armée.

On a en effet constaté que la résine phénolique butylée permettait d'obtenir à la fois un revêtement lisse présentant une bonne dureté superficielle mais aussi une souplesse améliorée ce qui évite les phénomènes de retrait et de craquelures. De plus, ce revêtement présente l'avantage de pouvoir être pigmenté directement dans la masse à la teinte desiree ce qui évite les dépôts ultérieurs d'autres résines. Si nécessaire le revêtement butylé est susceptible de recevoir une peinture de finition sans opération de bouchage et de ponçage préalable.

La résine phénolique butylée est préparée de façon connue soit par déshydratation d'un résol à l'aide de butanol soit par éthérification de résine phénolique du type résol, à l'aide de butanol ou encore par condensation directe deformol, de phénol et de butanol à pH au moins égal à 7, L'eau formée ou existante selon le procédé est séparée par distillation azéotropique. Quel que soit le procédé utilisé pour la fabrication de la résine butylée, le pourcentage d'eau dans la résine ne doit pas dépasser 5%. Si la résine butylée présente des quantités d'eau supérieure à 5%, on observe alors des phénomènes de micropiqûres à la surface du produit fini: dans ces conditions il est préférable de concentrer au maximum la résine butylée afin qu'elle contienne une quantité d'eau minime.

La réticulation ou durcissement de cette résine est réalisée à l'aide d'un catalyseur acide connu utilisé pour le durcissement des résines phénoliques. Ce catalyseur peut être un acide arénesulfonique comme l'acide benzénesulfonique, paratoluénesulfonique, ou bien un mélange de ces acides avec des acides minéraux forts comme l'acide sulfurique ou l'acide phosphorique. On peut ajouter à la résine phénol butylée avant durcissement différents adjuvants: charge minérale, solvant, agent thixotrope, agent d'étalement. La charge minérale doit être inerte aux acides. Le solvant est par exemple un glycol ou l'acétone. L'agent thixotrope est par exemple la silice pyrogénéee, la bentonite, la silice amorphe ou l'hydrate d'aluminium.

La résine phénolique butylée catalysée et éventuellement additionnée d'un ou plusieurs adjuvants peut être appliquée sur un stratifié de résine phénolique préparé au préalable. La couche de résine phénol butylée est appliquée de façon connue sur la ou les faces à'un moule sur laquelle on dépose ensuite des couches alternées successives de résine phénhlique et de renfort. L'application de la résine phénol butylée est réalisée manuellement à l'aide d'un pistolet sur le moule de façon à y former une couche d'épaisseur variant généralement entre 0,1 et 2 mm. Sur la couche ainsi obtenue on peut de façon connue réaliser la stratification à l'aide de résine phénolique et de renfort, par contact à froid ou à la presse à chaud ou par injection ou par enroulement filamentaire.

La résine phénolique utilisée pour la fabrication des matérieux stratifiés de l'invention est de façon connue un résol, en particulier un résol obtenu par polycondensation de formol et de phénol en présence de soude. Le durcissement est obtenu par addition d'un catalyseur acide. On emploi de préférence l'acide paratoluène sulfonique car il convient fort bien à la fois pour le durcissement de la résine phénolique armée et pour le durcissement de la résine phénolique butylée. Ainsi on utilise de préférence comme catalyseur, pour le durcissement de ces deux résines, une solution acqueuse concentrée d'acide paratoluènesulfonique.

La résine phénolique ainsi que la résine phénolique butylée peuvent contenir différents adjuvants tels que charges, solvants, plastifians: polyalcool en particulier. On peut utiliser tous les renforts connus pour résines phénoliques en particulier les renforts à base de fibres de verre.

Les exemples suivants illustrent la présente invention.

**Exemple 1**

**Préparation de la résine phénol butylée**

Dans un réacteur muni d'une colonne de distillation et d'un réfrigérant on charge 3000 parties d'une résine phénol-formol obtenue par condensation du formol sur le phénol dans un rapport molaire

$$\frac{Formol}{Phénol}$$

= 1,5 ayant une viscosité de 1 Pa. s à 20°C (10 poises) et un extrait sec (mesuré par chauffage de 4g de résine en étuve à 140°C pendant 3 heures) de 75% on neutralise à pH 7 par addition d'acide lactique, puis on ajoute 10% en poids de dipropylène-glycol. On ajoute ensuite 812 g de butanol. Par distillation sous vide à une pression de 80 kPa (600 mm Hg) on recueille 3 180 g de résine phénol butylée qui présente un extrait sec de 80,5% et une viscosité de 4,5 Pa.s à 20°C (45 poises). Elle contient 10,8% de butanol et 1,55% d'eau.

La résine phénol butylée ainsi obtenue est utilisée pour la fabrication d'un stratifié selon l'invention.

Sur un moule traité par un agent de démoulage constitué de cire de Carnauba on applique au pistolet une couche de résine phénol butylée de 0,3 mm d'épaisseur composée de (parties en poids):

Résine phénol butylée........................... 100
Hydrate d'aluminium.............................. 75
Silice.......................................... 25
Oxyde de titane................................. 7,5
Acétone......................................... 15
Solution d'acide para-toluène sulfonique
à 70% dans l'isopropanol........................ 10

On laisse la couche de résine phénol-butylée durcir 30 minutes dans une étuve maintenue à une température de 70°C. On dépose ensuite sur cette couche un mat de fibres de verre puis une couche d'une résine phénolique obtenue par condensation du formol sur le phénol dans un rapport molaire,

$$\frac{Formol}{Phénol}$$

= 1,5 ayant une viscosité de 1 Pa.s à 20°C, et un extrait sec de 75% et contenant 10% de dipropylène-glycol. Cette résine est additionnée de 8 parties d'un catalyseur constitué d'une solution aqueuse contenant 50 parties d'acide paratoluène sulfonique et 5 parties d'acide phosphorique.

On laisse durcir à 40°C pendant 1 heure, et on démoule le matériau composite obtenu qui présente du côté de la couche de la résine phénol butylée une surface parfaitement lisse dépourvue de micropiqûres.

**Exemple 2**

La surface de "gel coat" butylé du matériau stratifié préparé dans l'exemple 1 est revêtue à l'aide d'un pistolet d'une peinture bleue habituellement utilisée en carrosserie. Après durcissement on obtient un matériau stratifié présentant la surface peinte parfaitement lisse et dépourvue de piqûres. Le "gel coat" butylé peut donc être recouvert directement à l'aide d'une peinture sans préparation particulière.

**Exemple 3**

On charge dans un réacteur 3 760 parties de phénol, 4 300 parties de formol en solution à 50% et 1 185 parties de butanol. On condense ces réactifs à pH 8,5 par addition de 16 g de soude et chauffage à reflux pendant 90 minutes. Après neutralisation par l'acide lactique jusqu'à pH égal à 6,9 en obtient 5 700g d'une résine butylée qui contient 4,9% de butanol et 1,3 % d'eau.

phénol butylée dépourvue de micropiqûres.

## Exemple 4

A la résine butylée préparée dans l'exemple 3 on ajoute à 100 parties:

Hydrate d'aluminium.................................. 75 parties
Silice broyée........................................ 25 parties
Oxyde de titane..................................... 7,5 parties
Pigment rouge vendu par la société FERRO sous la marque V 500...................................... 15 parties
Silice pyrogenée.................................... 0,5 parties

Cette résine chargée et pigmentée est appliquée comme dans l'exemple 1 dans un moule pour la fabrication d'un matériau stratifié. La résine butylée est durcie à l'aide de 8 parties d'un catalyseur constitué d'une solution d'acide para-toluène sulfonique dans l'isopropanol puis traitée en étuve à 70°C pendant 30 minutes.

## Exemple 5

Sur un moule traité par un agent de démoulage on applique à l'aide d'une régle munie à sa base d'un évidement calibre 0,35 mm d'une couche de résine phénol-butylée constituée de: (quantités exprimées en parties en poids):

Résine phénol butylée............................. 100
Dipropylène glycol................................. 5
Pigment rouge vendu par la société FERRO sous la marque V 500...................................... 20
Agent d'étalement................................. 0,3
Solution d'acide para-toluène sulfonique à 70% dans le propanol-2................................ 8

On laisse durcir la couche de résine phénol butylé dans une étuve à 75°C pendant 25 minutes. On dépose ensuite sur cette couche un mat de fibres de verre puis une couche d'une résine phénolique obtenue par condensation du formol sur le phénol dans un rapport

$$\frac{\text{Formol}}{\text{Phénol}}$$

= 1,5 et ayant une viscosité de 1 Pa.s à 20°C et un extrait sec de 75% et contenant 10% de dipropylèneglycol. Cette résine est additionnée de 8 parties d'un catalyseur constitué d'une solution aqueuse contenant 60% d'acide para-toluène sulfonique et 5% d'acide phosphorique.
· On fabrique un matériau stratifié en mettant en oeuvre des fibres de verre et la résine phénolique décrite ci-dessus.

Après durcissement en étuve, on obtient un matériau coloré du côté de la couche de la résine

## Exemple 6

L'exemple 1 est répété mais en utilisant une résine phénol butylée qui contienu après concentration sous vide 5,5 d'eau.

Un matériau stratifié est fabriqué avec cette résine selon le procédé décrit dans l'exemple 1. Après démoulage on obtient un matériau comportant de nombreuses micropiqûres.

## Revendications

1) Matériaux stratifiés à base de résine phénolique armée d'un renfort, revêtus d'une couche de finition ayant au moins deux faces, caractérisés en ce qu'ils comportent sur au moins une de leurs faces, une couche d'une composition à base de résine phénolique butylée directement en contact avec la résine phénolique armée.

2) Matériaux selon la revendication 1 caractérisés en ce que la résine phénolique butylée est directement pigmentée dans la masse.

3) Matériaux selon la revendication 1 caractérisés en ce que la résine phénolique butylée contient au plus 5% d'eau.

4) Procédé de préparation des matériaux, selon les revendications 1 à 3 caractérisés en ce qu'il consiste à déposer sur la ou les faces d'un moule la résine phénolique butylée puis à déposer sur cette couche de résine phénolique butylée des couches alternées successives de résine phénolique et de renfort.

## Patentansprüche

1. Schichtmaterialien auf Phenolharzbasis, die mit einer Verstärkung armiert und mit einer Deckschicht überzogen sind und mindestens zwei Seiten aufweisen, dadurch gekennzeichnet, daß sie auf mindestens einer ihrer Seiten eine Schicht aus einer Zusammensetzung auf Basis von butylmodifiziertem Phenolharz besitzen, welche Schicht direkt mit dem armierten Phenolharz in Kontakt ist.

2. Materialien nach Anspruch 1, dadurch gekennzeichnet, daß das butylmodifizierte Phenolharz direkt in der Masse pigmentiert ist.

3. Materialien nach Anspruch 1, dadurch gekennzeichnet, daß das butylmodifizierte Phenolharz höchstens 5% Wasser enthält.

4. Verfahren zur Herstellung der Materialien nach den Ansprüchen 1 bis 3, dadurch gekennzeichnet, daß es darin besteht, daß auf der oder den Oberflächen einer Form das butylmodifizierte Phenolharz abgelagert wird und dann auf dieser Schicht aus butylmodifiziertem Phenolharz in abwechselnder Reihenfolge Phenolharzschichten und Verstärkungsschichten abgelagert werden.

## Claims

1. Laminated materials having a phenolic resin base strengthened with a reinforcement, the said materials being coated with a finishing layer having at least two faces, characterised in that on at least one of their faces, the said materials comprise a layer having a composition with a butyl phenolic resin base in direct contact with the reinforced phenolic resin.

2. Materials according to claim 1, characterised in that the butyl phenolic resin is directly pigmented into the substance.

3. Materials according to claim 1, characterised in that the butyl phenolic resin comprises a maximum of 5 % water.

4. Method of preparing materials according to claims 1 to 3, characterised in that it consists in applying the butyl phenolic resin to the face or faces of a mould and subsequently applying alternate layers of phenolic resin and reinforcement onto the said butyl phenolic resin layer.